# EUROPÄISCHE PATENTSCHRIFT

(11) **EP 1 452 495 B1**
(45) Veröffentlichungstag und Bekanntmachung des Hinweises auf die Patenterteilung: **29.04.2009**
(21) Anmeldenummer: 04002686.6
(22) Anmeldetag: 06.02.2004
(51) Int. Cl.: C03C 3/062, C03C 3/085, C03C 13/04

(54) **Aluminosilikatglas**
Aluminosilicate glass
Verre aluminosilicaté

(30) Priorität: 25.02.2003 DE 10309495
(43) Veröffentlichungstag der Anmeldung: 01.09.2004
(73) Patentinhaber: Schott AG, 55122 Mainz (DE)
(72) Erfinder: Wolff, Silke, 42499 Hückeswagen (DE); Wölfel, Ute, 55130 Mainz (DE); Kolberg, Uwe, 55124 Mainz (DE); Kasprzik, Holger, 55124 Mainz (DE)
(74) Vertreter: Gahlert, Stefan

(56) Entgegenhaltungen:
- DE-C1- 19 631 580
- US-A- 3 999 836
- US-A- 4 265 667
- US-A- 4 472 030
- PATENT ABSTRACTS OF JAPAN Bd. 018, Nr. 385 (C-1227), 20. Juli 1994 (1994-07-20) & JP 06 107425 A (OHARA INC), 19. April 1994 (1994-04-19)

## Beschreibung

Die Erfindung betrifft ein Aluminosilikatglas für optische Anwendungen, das insbesondere vorteilhaft als Faserkernglas verwendbar ist.

Herkömmliche optische Gläser, die einen Brechungsindex im Bereich zwischen 1,55 und 1,65 aufweisen (Doppelschwerkron- und Bariumleichtflint-Bereich) enthalten in der Regel PbO, um die erwünschten optischen Eigenschaften (Brechwert von 1,55 ≤ n_{d} ≤ 1,65 und Abbewert von 48 ≤ ν_{d} ≤ 57) bei guter Transmission zu erreichen. Derartige Gläser sind für zahlreiche optische Anwendungen von Interesse, bspw. für die Applikationsbereiche Abbildung, Projektion, Telekommunikation, optische Nachrichtentechnik und Lasertechnologie, insbesondere aber auch für Faseranwendungen (Bild- und/oder Lichtleiter). Durch ihren Bleigehalt sind derartige Gläser wenig chemisch beständig. Als Läutermittel werden zudem häufig As₂O₃ verwendet. Da in den letzten Jahren die Glaskomponente PbO und häufig auch As₂O₃ als umweltbedenklich angesehen werden, tendieren die meisten Hersteller optischer Instrumente und Produkte dazu, bevorzugte blei- und gerne auch arsenfreie Gläser einzusetzen. Zur Verwendung in Produkten hoher Vergütungsstufen gewinnen zudem Materialien mit erhöhten chemischen Beständigkeiten (um die Vergütungsprozesse unbeschadet zu durchlaufen), bei gleichbleibend hohen Transmissionen (sehr geringer Dämpfung), stetig an Bedeutung.

Als bleifreier Ersatz für klassische optische Gläser sind Gläser mit großen Mengen an TiO₂ in silikatischer Matrix bekannt, was zu äußerst kristallisationsinstabilen, schwer schmelzbaren und extrem schwer bearbeitbaren Gläsern führt. Zusätzlich sinkt die Transmission (steigt die Dämpfung) der Gläser durch die intrinsische Adsorption des TiO₂.

Ferner wird in jüngster Zeit aus Verarbeitungsgründen vielfach die Entwicklung von sogenannten "kurzen" Gläsern gefordert, also nach Gläsern, die ihre Viskosität extrem stark mit der Temperatur variieren. Dieses Verhalten hat bei der Verarbeitung den Vorteil, dass die Heißformgebungszeiten, also die Formschlusszeiten gesenkt werden können. Dadurch wird zum einen der Durchsatz erhöht, zum anderen wird so das Formenmaterial geschont, was sich äußerst positiv auf die gesamten Produktionskosten niederschlägt. Auch können durch die so ermöglichte schnellere Auskühlung (kürzere Formschlusszeiten) sogar Gläser mit stärkerer Kristallisationsneigung verarbeitet werden als bei entsprechenden längeren Gläsern, und eine Vorkeimung, die nachfolgenden Sekundärheißformgebungsschritten (Faserzug, Ionenaustausch, Nachverpressen, Umsenken, Feinkühlen etc.) problematisch sein könnte, wird vermieden.

Für Mikrostrukturierungszwecke (Gradientenindexlinsen, (planare, stabförmige, faser(Bündel)-artige) Wellenleiter, Kugellinsen etc.) mittels Ionenaustausch (z.B. Na-Ag), sollten die neuen Materialien zudem unter wirtschaftlichen Bedingungen in Standardprozessen ionenaustauschbar sein. Ein Zusatzmerkmal kann zudem die spannungsaufbauende Ionenaustauschbarkeit (z.B. Na-K, "Vorspannbarkeit") sein.

Universell einsetzbare optische Materialien sollten heute ebenfalls in Faserapplikationen, z.B. als Faserkernglas, eingesetzt werden können. Zu diesem Zweck müssen neue Typen besonders tolerant gegenüber Sekundärheißformgebungsschritten (Faserzug, Verschmelzen usw.) sein, und eine gute Verträglichkeit mit konventionellen Fasermantelgläsern aufweisen.

Im Allgemeinen ist eine Glasfaser zur Lichtübertragung aus einem hoch brechenden Kernglas und einem, dieses Kernglas umgebenden, Mantelglas mit niedrigerer Brechzahl als der des Kernglases aufgebaut. Unter entsprechend günstigen Bedingungen können Stufenfasern, umfassend ein Kernglas und ein das Kernglas vollständig an seiner Umfangswand umschließendes Mantelglas hergestellt werden. Ein lichtübertragender Glaskörper in Faserform, bei dem über den Querschnitt des Kernglases die Brechzahl konstant ist, nennt man Stufenfaser. Glasfasern dieses Typs übertragen Licht, das an einem Ende der Faser in den Kern eingekoppelt wird, an das andere Ende der Faser, wobei das Licht an der Grenzfläche zwischen Kernglas und Mantelglas vollständig reflektiert wird (Totalreflexion).

Die Lichtmenge, die in eine solche Faser eingekoppelt und übertragen werden kann, ist proportional dem Quadrat der numerischen Apertur (NA) der Faser und der Querschnittsfläche des Faserkerns. Um möglichst große Lichtmengen über große bis mittlere Entfernungen (≤ 100 Meter) zu übertragen, werden solche Stufenfasern häufig zu dichten Faserbündeln zusammengepackt, mit einem Schutzschlauch versehen, ihre Enden in Metallhülsen eingeklebt und die Stirnseiten durch Schleifen und Polieren zu optisch planen Flächen bearbeitet. Entsprechend konfektionierte optische Faserbündel nennt man faseroptische Lichtleiter. Wird ein Produktionsprozess angewandt, der eine geometrische Sortierung der einzelnen Fasern zulässt, können auf demselben Weg Bildleiter hergestellt werden.

Je höher die NA der das Bündel enthaltenden Einzelfasern ist, desto größere Lichtmengen können diese Lichtleiter übertragen.

Faseroptische Lichtleiter finden in den unterschiedlichsten technischen und medizinischen Bereichen Anwendung (allgemeine Industrietechnik, Beleuchtungs-, Verkehrstechnik, Automobilindustrie, Architektur, Endoskopie, Dentalmedizin). Ihre wichtigste Funktion ist die Übertragung eines möglichst großen Lichtstroms von einem Ort A zu einem anderen Ort B, meist über kurze bis mittlere Entfernungen (einige wenige bis maximal 100 Meter). Dabei wird häufig das von einer leistungsstarken Lichtquelle ausgehende Licht, z.B. das einer Halogen- oder Entladungslampe, mittels optischer Hilfsmittel, wie einer Linse, oder einem Reflektor, in das Faserbündel eingekoppelt.

Die durch faseroptische Lichtleiter übertragene Lichtmenge hängt neben der NA ihrer Fasern auch von den Transmissionseigenschaften der sie enthaltenden Kerngläser ab. Nur Kerngläser ganz bestimmter spezifischer Zusammensetzungen mit sehr niedrigen Verunreinigungsgraden der Rohstoffe, aus denen sie geschmolzen werden, leiten das Licht möglicht dämpfungsarm über die gesamte Lichtleiterlänge. Die Rohstoffe zum Erschmelzen solcher Kerngläser sind aufgrund ihrer hohen Reinheit recht teuer, was zu erheblichen Herstellkosten solcher Fasern bzw. daraus hergestellter Lichtleiter führen kann.

Neben der Lichtmenge, die ein faseroptischer Lichtleiter überträgt, spielt häufig eine farbsticharme Übertragung des Lichtes durch ihn eine bedeutende Rolle. Aufgrund der spektralen Transmissionsabhängigkeit des Kernglases, das die Fasern enthalten, erfolgt eine mehr oder weniger starke Farbverschiebung des Farbortes der eingekoppelten Lichtquelle, was sich meist in einem Gelbstich des aus dem Lichtleiter austretenden Lichtes bemerkbar macht. Dies wirkt sich überall dort störend aus, wo es auf farbneutrale Wiedergabe ankommt (z.B. in der medizinischen Endoskopie bei fotografischer Bilddokumentation zur Differenzierung von z.B. gesundem und malignem Gewebe u.s.w.). Die Herstellung optischer Stufenfasern aus Mehrkomponentengläsern erfolgt entweder über das sogenannte Doppeltiegel- oder das Stab-Rohr-Verfahren. In beiden Fällen werden Kern- und Mantelglas auf Temperaturen erhitzt, die einem Viskositätsbereich zwischen 10⁴ bis 10³ dPas entsprechen und dabei zu einer Faser ausgezogen. Damit eine stabile Faser niedriger Dämpfung hergestellt werden kann, müssen Kern- und Mantelglas in einer Reihe von Eigenschaften, wie etwa Viskositätsverlauf, thermische Ausdehnung, Kristallisationsneigung etc., kompatibel zueinander sein. Insbesondere darf es in der Grenzfläche zwischen Faserkern und -mantel nicht zu einer Kontaktreaktion bzw. einer Kristallisation kommen, was eine Totalreflexion des im Faserkern geführten Lichtes empfindlich stören und damit die Faser für die Anwendung zur dämpfungsarmen Lichtübertragung untauglich machen würde. Darüber hinaus würde auch die mechanische Festigkeit der Faser durch Kristallisation negativ beeinträchtigt.

Aus der DE 27 47 919 A1 ist ein fotochromes Glas bekannt, das überwiegend Silberoxid oder alternativ zumindest Kupferoxid enthält. Solche fotochromen Gläser verändern bei Einwirkung elektromagnetischer Strahlung im sichtbaren Spektralbereich ihr spektrales Transmissionsverhalten hin zu geringeren Transmissionsgraden. Der Zusatz von Silber und ggf. Kupfer führt zu einem inakzeptabel stark verschlechterten Transmissionsverhalten und zu einer unnötigen Verteuerung der Gläser für die angestrebten Applikationen.

Ein weiteres fototropes Glas ist aus der DE 1 924 493 C3 bekannt. Das betreffende Glas weist einen hohen Anteil von B₂O₃ zwischen 30 und 80 Mol-% auf. Dieser hohe Boranteil verringert, durch extrem starke Verringerung der Viskosität, die Kristallisationsstabilität der Gläser, da die Migrationsgeschwindigkeit kristallbildender Komponenten erhöht wird. Zudem erhöht der Boranteil die Feuerfestaggressivität des Materials, so dass durch verringerte Schmelzaggregatstandzeiten die Produktionskosten stark erhöht sind. Auch wird La₂O₃, das eine starke intrinsische Absorption besitzt und damit dämpfungsschädlich ist, obligatorisch mit mindestens einem Mol-% zugesetzt.

Optische Gläser mit stark anomaler Teildispersion sind aus der JP 98 130 033 A bekannt. Auch diese weisen einen hohen Anteil von mindestens 12,5 Gew.-% B₂O₃ auf. Zusätzlich enthalten sie zur Einstellung der beanspruchten optischen Eigenschaften obligatorisch mindestens 6 Gew.-% des sehr teuren Rohstoffs Nb₂O₅.

Vergleichbar sind auch die in JP 91 037 130 A (Patent Abstracts of Japan 03 037 130 A) offenbarten Gläser zu bewerten. Auch hier gibt es neben dem obligatorischen, kristallisationsfördernden Bortrioxid-Anteil von mindestens 11 Gew.-% einen Zusatz von mindestens 4 Gew.-% La₂O₃ und/oder Gd₂O₃ zur Einstellung bestimmter optischen Eigenschaften, was zu einer Erhöhung der Dämpfung führt. Erschwerend kommt hier noch ein zwingender Anteil von mindestens 3 Gew.-% Li₂O hinzu, der die Aggressivität des Glases gegenüber dem Feuerfestmaterial zusätzlich und synergistisch mit dem vorhandenen B₂O₃ steigert.

In ähnlicher Weise sind auch die aus der JP 85 221 338 A (Patent Abstracts of Japan 60 221 338 A) bekannten optischen Gläser zu bewerten. Der obligatorische Gehalt an B₂O₃ von mindestens 1 Gew.-% und von 0,5 Gew.-% Li₂O fördert die Kristallisation und senkt die Feuerfest-Akzeptanz des Materials, während die zur Einstellung der optischen Lage der obligatorischen Anteile von La₂O₃ in Höhe von mindestens 1 Gew.-% und von Y₂O₃ in Höhe von mindestens 0,1 Gew.-% die Dämpfungseigenschaften des Materials durch intrinsische Absorption verschlechtern und zudem das Glas verteuern.

Aus der JP 89 133 956 A (Patent Abstracts of Japan 01 133 956 A) ist ferner ein Glas für die Herstellung von Indexgradientenlinsen bekannt, das einen Gehalt von bis zu 20 Gew.-% B₂O₃ aufweist, das mit den gleichen Nachteilen behaftet ist.

In entsprechender Weise ist das aus der JP 87 012 635 A (Patent Abstracts of Japan 62 012 635 A) bekannte Glas zu bewerten. Dieses Glas weist einen obligatorischen Gehalt von mindestens 10 Mol-% Li₂O bei einem optionalen Bortrioxidgehalt bis zu 8 Mol-% auf. Ferner werden zur Einstellung der optischen Eigenschaften mindestens 3 Mol-% Nb₂O₅ zugesetzt.

Auch für den Ionenaustausch und damit zur Herstellung von Indexgradientenlinsen gedachte Gläser offenbart die JP 87 055 761 B. Hierbei wird für den Ionenaustausch mit der äußerst toxischen Substanz Tantal gearbeitet, die nach heutigen Erkenntnissen ein um mehrere Faktoren größeres Gefahrenpotential in Abbau, Gewinnung, Reinigung und Verarbeitung darstellt als Blei.

Dieselbe Argumentation gilt für die aus der DE 3 217 897 A1 bekannten Gläser, die mindestens 1 Gew.-% Tallium aufweisen.

Die aus der DE 3 016 116 C2 bekannten Gläser besitzen obligatorische BaO-Gehalte zwischen 30 und 45 Gew.-% und weisen darüber hinaus mindestens 5 Gew.-% Bortrioxid auf. Hierbei wird zum einen durch den hohen Bariumoxidgehalt die Brechwertlage weit zu höheren Brechwerten und Dispersionen weiter als gewünscht verschoben. Zudem neigen Erdalkalioxide bei zu hohen Gehalten im Glassystem dazu, Diffusionssperrschichten aufzubauen und wirken so einem effektiven, wirtschaftlichen Ionenaustauschprozess entgegen. Auch verringern sie die Kristallisationsstabilität der Gläser, besonders in Kombination mit ZrO₂ (obligatorischer Summengehalt BaO+ZrO₂ > 38 Gew.-%). Durch den Zusatz von Bortrioxid wird ferner die Feuerfestaggressivität vergrößert.

Auch indexgradientenlinsentaugliche Gläser werden durch die JP 87 012 633 offenbart. Es wird hier ein Austauschprozess mit Cäsium-Zink beschrieben. Cs₂O₃ mit obligatorischen Gehalten von mindestens 2,86 Gew.-% ist ein extrem teurer Rohstoff, der außer zur Einstellung der in dieser Schrift benötigten Ionenaustauscheigenschaften keine Funktion hat, die nicht auch durch die anderen Alkalimetalloxide übernommen werden könnten.

Aus der GB 2 233 781 A sind weitere optische Gläser für ein achromatisches Linsensystem bekannt, mit einem Brechungsindex von maximal 1,70 und einer Abbezahl von weniger als 55, die aus SiO₂, R₂O und ZrO₂ bestehen, wobei R₂O aus Li₂O, Na₂O und K₂O ausgewählt ist, und die Komponenten wenigstens 30 Gew.-% des Glases ausmachen, wobei der Rest aus kompatiblen Komponenten bestehen soll. Tatsächlich offenbart in dieser Anmeldung sind allerdings lediglich Gläser, die entweder Li₂O-Anteile von mindestens 2,6 Gew.-% oder aber PbO-Anteile von mindestens 7 Gew.-% oder aber ZrO₂-Anteile von mehr als 10 Gew.-% aufweisen.

Während der PbO-Anteil nachteilig für die chemische Beständigkeit ist, wird durch den Li₂O-Anteil die Feuerfeststabilität beeinträchtigt. Zu hohe ZrO₂-Anteile können dagegen zu verstärkter Kristallisationsneigung führen.

Aus der JP 77 045 612 A ist ein optisches Flintglas bekannt, also ein Glas mit einem höheren Brechungsindex bei erhöhter Dispersion. Hierbei ist es obligatorisch, 5 bis 60 Gew.-% Nb₂O₅ zur Einstellung der gewünschten optischen Eigenschaften zuzusetzen. Hierbei handelt es sich um einen, besonders in optischen Qualitäten teuren Rohstoff, der möglichst vermieden werden sollte.

Zur Herstellung von Stufenfasern sind im Stand der Technik grundsätzlich drei unterschiedliche Fasersysteme bekannt.

Das wohl bekannteste und am weitesten verbreitete Fasersystem besteht aus einem hoch bleihaltigen Kernglas (meist 35 Gew.-% PbO) und einem Alkaliborosilikatglas als Mantelglas. Sein Vorteil liegt in der erreichbaren hohen numerischen Apertur (bis zu mehr als 0,7 bei PbO-Anteilen des Kernglases von > 50 %) bei niedrigen Herstellkosten und einer guten Ziehbarkeit zu Fasern ohne Kristallisationsprobleme. Demgegenüber stehen Nachteile wie mittlere bis schlechte Dämpfung (200 bis 300 dB/km) sowie vergleichsweise starker Farbstich, hauptsächlich bedingt durch Pb-Eigenabsorption (Blaukante des sichtbaren Spektrums) sowie eingeschleppte Verunreinigungen an stark färbenden Elementen, wie Chrom und Nickel, gegenüber. Zudem ist Blei als umweltbelastender Stoff mehr und mehr in Verruf geraten und kommt daher für Fasern in spezifischen Anwendungsfällen nur noch mit Einschränkungen oder gar nicht mehr zum Einsatz.

Ein zweites Fasersystem besteht aus einem Alkaliborosilikatglas, das sowohl als Kern- als auch als Mantelglas zum Einsatz kommt.

Im Stand der Technik sind verschiedene solcher Glassysteme beschrieben, z.B. in der EP 0 018 110 B1 oder der EP 0 081 928 B1, der DE 29 40 451 A1 oder der US 4 264 131. Diese Gläser enthalten teilweise neben einem hohen Boranteil auch hohe Anteile an Erdalkali und/oder Zirkon- und Germaniumoxid, um die gewünschte hohe Brechzahl zu erreichen. Ihr Vorteil liegt in der außerordentlich niedrigen Dämpfung (z.T. bei 10 dB/km) und sehr niedrigem Farbstich bei gleichzeitig meist umweltfreundlichen Rohstoffen. Ein Nachteil dieser Gläser besteht in der meist geringeren numerischen Apertur der Fasern, sowie in einer geringeren chemischen Beständigkeit. Auch ist der obligatorische Boroxidanteil (US 4 264 131, EP 0 081 928 B1, DE 29 40 451 A) nachteilig für die Feuerfestbeständigkeit. Wegen der schlechteren chemischen Beständigkeit müssen die Fasern direkt bei ihrer Herstellung, unmittelbar nach dem Ziehen z.B. aus der Düse am Doppeltiegel, online mit einem Kunststoffmantel als Schutz gegen möglichen chemischen und/oder mechanischen Angriff versehen werden. Darüber hinaus wird die niedrige Dämpfung durch die Verwendung hochreiner und damit sehr teurer Rohstoffe erkauft. Beide letztgenannten Aspekte, hohe Herstellkosten und obligatorischer Kunststoffmantel, machen damit die Verwendung als Bündelfaser für breitere Anwendungen praktisch unmöglich. Vielmehr finden sie als Einzelfaser zur Daten- oder Energieübertragung (Laserfaser) in einer Vielzahl spezieller Applikationen Verwendung.

Auch Fasern auf reiner SiO₂-Basis, als drittes Fasersystem, kommen prinzipiell als Bündelfaser zur Lichtübertragung in Frage. Ihren Vorzügen einer extrem niedrigen Dämpfung (bis 6 dB/km), sehr guter Farbneutralität und guter Umweltverträglichkeit, stehen als gravierendster Nachteil die hohen Kosten gegenüber. Reines Kieselglasmaterial ist aufgrund der hohen Verarbeitungstemperatur extrem teuer. Hinzu kommt ein aufwendiger Dotierungsprozess der sogenannten Preform, bei dem durch Einbau von Fluor in die Oberfläche eines zylindrischen Stabes die notwendige Brechzahlerniedrigung des reinen Quarzes erzielt wird, die als optische Isolation zur Lichtübertragung in der späteren Faser notwendig ist. Zudem ist die erreichbare numerische Apertur von Quarzfasern recht begrenzt (0,22).

Aus der US-A-3 999 836 ist ein Aluminosilikatglas bekannt, das 47,1 Gew.-% SiO₂, 6,7 Gew.-% Al₂O₃, 30 Gew.-% BaO, 16,2 Gew.-% Na₂O und 0,05 Gew.-% Sb₂O₃. Es wird zur Herstellung von Faseroptik verwendet.

Aus der US-A-4 265 667 ist ferner eine Stufenfaser bekannt, die ein Kernmaterial aus einem Glas mit einer Zusammensetzung von 15 bis 40 Gew.-% SiO₂, 8 bis 17 Gew.-% ZrO₂, 5 bis 15 Gew.-% B₂O₃, 30 bis 45 Gew.-% BaO, 3 bis 15 Gew.-% Na₂O und 0 bis 30 Gew.-% GeO₂, 0 bis 3 Gew.-% TiO₂, 0 bis 5 Gew.-% Al₂O₃, 0 bis 5 Gew.-% La₂O₃, 0 bis 5 Gew.-% MgO, 0 bis 7 Gew.-% CaO, 0 bis 7 Gew.-% ZnO, 0 bis 5 Gew.-% SrO, 0 bis 8 Gew.-% Li₂O, 0 bis 10 Gew.-% K₂O, 0 bis 5 Gew.-% Rb₂O und 0 bis 8 Gew.-% Cs₂O aufweist. Dabei beträgt die Summe aus SiO₂ und GeO₂ 15 bis 50 Gew.-%, die Summe aus ZrO₂ und BaO 38 bis 55 Gew.-%, die Summe aus Na₂O + Li₂O + K₂O + Rb₂O + Cs₂O 5 bis 15 Gew.-% und die Summe aus MgO + CaO + ZnO + SrO + CO₂ + Al₂O₃ + La₂O₃ 0 bis 12 Gew.-%.

Der vorliegenden Erfindung liegt die Aufgabe zugrunde, ein optisches Glas anzugeben, das einen Brechungsindex im Bereich zwischen 1,55 und 1,65 und einen Abbewert zwischen 48 und 57 ermöglicht und gleichzeitig eine verbesserte chemische Beständigkeit aufweist. Dabei soll ferner eine möglichst geringe Dämpfung erreicht werden und eine gute Toleranz gegenüber Sekundärheißformgebungsschritten ermöglicht sein. Das Glas soll insbesondere auch als Faserkernglas verwendbar sein und mit üblichen faseroptischen Mantelgläsern kompatibel verarbeitbar sein.

Ferner soll eine optische Stufenfaser angegeben werden, die unter Verwendung eines derartigen Glases herstellbar ist.

Diese Aufgabe wird erfindungsgemäß gelöst durch ein Glas mit den Merkmalen des Anspruchs 1 gelöst.

Das erfindungsgemäße Glas ist als optisches Glas für zahlreiche Applikationsbereiche, wie für die Abbildung, Projektion, Telekommunikation, optische Nachrichtentechnik und/oder Lasertechnologie einsetzbar, besonders auch für Faseranwendungen (Bildund/oder Lichtleiter) mit einem Brechwert von 1,55 ≤ n_{d} ≤ 1,65, einem Abbewert von 48 ≤ ν_{d} ≤ 57 und sehr guter Transmission (geringer Dämpfung). Das erfindungsgemäße Glas ist gut zu schmelzen und zu verarbeiten und weist eine gute chemische Beständigkeit auf. Des weiteren weist das erfindungsgemäße Glas gute Ionenaustauscheigenschaften und ausreichende Kristallisationsstabilität auf, die eine Primär-Fertigung und sekundäre Heißformgebungsschritte (Faserzug, Ionenaustausch, Umsenken, Feinkühlen, Nachverpressen) in kontinuierlich geführten Aggregaten möglich machen. Die erfindungsgemäßen Gläser besitzen eine günstige Kristallisationsstabilität und ein kurzes Viskositätstemperaturprofil, wodurch die thermische Behandlung (Faserzug, Ionenaustausch, Umsenken, Feinkühlen, Nachverpressen) der Gläser ohne Weiteres ermöglicht wird.

Die erfindungsgemäßen Gläser zeichnen sich durch eine gute Umweltverträglichkeit aus, da diese kein Tallium oder Blei enthalten und sind recht kostengünstig herstellbar, da auf den Zusatz von Silber, Kupfer oder anderen teuren Komponenten verzichtet wird. Da die erfindungsgemäßen Gläser wenig, vorzugsweise gar kein, Cäsium und Lithium aufweisen und auch frei von Bortrioxid sind, ist die Feuerfestaggressivität deutlich herabgesetzt. Da nur wenig, vorzugsweise gar kein, Titanoxid zugesetzt wird, wird die Kristallisationsneigung vorteilhaft beeinflusst.

Die erfindungsgemäßen Gläser können neben maximalen Anteilen von 15 Gew.-% Alkalimetalloxiden auch 8 Gew.-% Erdalkalimetalloxide (MgO+CaO+SrO) und bis zu 6 Gew.-% Phosphat (P₂O₅) beinhalten und unter Zusatz üblicher Läutermittel erschmolzen werden.

Weitere bevorzugte Zusammensetzungsbereiche sind in den Ansprüchen 3 und 5 bis 8 zusammengefasst.

Als Läutermittel, die meist mit weniger als 1 Gew.-%, bevorzugt mit maximal 0,5 Gew.-% zugesetzt werden, kommen z.B. Sb₂O₃, As₂O₃, SnO, NaCl, SO⁴⁻ und F- in Frage.

Bevorzugte Gläser sind arsenfrei geläutert, für bestimmte qualitativ hochwertige Faserapplikationen kann jedoch auf die dämpfungsfreundliche Arsenläuterung nicht vollständig verzichtet werden.

Das Grundglassystem ist ein Aluminosilikat-Glassystem, welches aus sich heraus bereits die Basis für eine gute chemische Resistenz, exzellente Ionenaustauscheigenschaften und hohe Kristallisationsbeständigkeit mitbringt. Es setzt sich aus den Glasbildnern SiO₂ und Al₂O₃ mit einem Summengehalt von 36 bis < 60 Gew.-% (bevorzugt 36 bis 58 Gew.-%, weiter bevorzugt 37 bis 52 Gew.-%, weiter bevorzugt 40 bis 52 Gew.-%, besonders bevorzugt 42 bis 52 Gew.-%) zusammen. Dabei bildet SiO₂ mit einem Gehalt von 35 bis < 50 Gew.-% (bevorzugt 35 bis 48 Gew.-%, weiter bevorzugt 35 bis 45 Gew.-%, weiter bevorzugt 37 bis 45 Gew.-%, besonders bevorzugt 39 bis 45 Gew.-%) die Basis, der Al₂O₃ in Gehalten von 1 bis 10 Gew.-% (bevorzugt 2 bis 7 Gew.-%, besonders bevorzugt 3 bis 7 Gew.-%) zugegeben wird. Der Mindestsummengehalt von 36 Gew.-% sollte hierbei nicht unterschritten werden, da dies Nachteile bezüglich der chemischen Resistenz und bezüglich der Kristallisationsstabilität haben könnte. Das sich aus den Einzelgehalten und der Summenangabe ergebende Verhältnis der beiden Glasbildner sollte ebenfalls bevorzugt eingehalten werden. Da der Al₂O₃-Gehalt für die Erhöhung der chemischen Resistenz im Vergleich mit rein silikatischer Matrix verantwortlich zeichnet, sollte dessen Mindestgehalt von 1 Gew.-% nicht unterschritten werden. Eine Erhöhung des Al₂O₃-Gehalts über 10 Gew.-% hinaus würde dagegen zu einer extrem starken Erhöhung des Gemengeschmelzpunktes und so zu erhöhtem Produktionsaufwand mit entsprechend erhöhten Produktionskosten führen. Außerdem würde die Länge des Glases steigen, was den Prinzipien der modernen Heißformgebungstechnologien widerspricht. Eine Erhöhung des Gesamt-Glasbildnergehaltes über 60 Gew.-% hinaus, bspw. durch Erhöhung des SiO₂-Gehalts über 50 Gew.-%, würde denselben negativen Effekt hervorrufen, ohne weitere Vorteile im Hinblick auf die chemische Resistenz zu bieten. Eine Verringerung des SiO₂-Gehalts unter 35 Gew.-% würde konkret zu einer Verringerung der Kristallisationsstabilität der erfindungsgemäßen Gläser führen. Eine Verringerung des Al₂O₃-Gehalts unter 1 Gew.-% zöge zudem eine Verschlechterung der Ionenaustauscheigenschaften nach sich, da ein Gehalt in den angegebenen Grenzen mindestens notwendig ist, um die Silikatstruktur des Materials mittels durch Al₂O₃ hervorgerufener Röhrenstrukturen aufzuweiten und damit die Voraussetzung für effektive Diffusions- und damit Ionenaustauschprozesse zu schaffen.

Der Einsatz von B₂O₃ zur Reduzierung der Viskosität und des Schmelzpunktes des Glases ist bei den hier angestrebten Applikationen in extrem dämpfungsarmen Systemen keine Alternative, da B₂O₃ die Gläser aggressiver gegenüber den verwendeten feuerfesten Materialien macht. Würde mit einem signifikanten Bortrioxidgehalt in Quarzgut-Tiegeln erschmolzen, so würde die starke Korrosion zu einem erhöhten Eintrag von Silikat ins Glas führen und damit, neben einer Veränderung der Glaseigenschaften, zu deutlich verkürzten Aggregatstandzeiten und damit zu erhöhten Produktionskosten führen. Würde borhaltig in Platintiegeln erschmolzen, wäre der durch das Bortrioxid verursachte Platineintrag ins Glas so hoch, dass die angestrebten exzellenten Dämpfungswerte (besonders an der blauen Spektralkante) nicht mehr erreicht werden könnten. Somit wird der Einsatz von Bortrioxid in den erfindungsgemäßen Gläsern vermieden, wie auch ein Einsatz von Li₂O und Cs₂O aus den gleichen Gründen. Zusätzlich ergeben sich zwischen Bortrioxid und Li₂O bzw. Cs₂O synergistische Effekte im Bezug auf den Feuerfestangriff der Gläser. Somit sind die erfindungsgemäßen Gläser vorzugsweise von B₂O₃, Li₂O und Cs₂O frei.

Statt dessen wird bevorzugt Na₂O als Flussmittel zur Reduzierung der Viskosität eingesetzt. So kann der Schmelzpunkt auch für konventionelle Aggregate akzeptable Werte gehalten werden. Für einen effektiven Einsatz darf der Mindestgehalt von 5 Gew.-%, bevorzugt 6 Gew.-%, besonders bevorzugt 8 Gew.-% daher nicht unterschritten werden. Auch die Ionenaustauscheigenschaften würden bei einem verringerten Na₂O-Gehalt sinken, da es die auszutauschende Komponente bildet. Bei verringerten Gehalten könnte der angestrebte maximale Brechungsindexgradient nicht mehr erreicht werden. Auch würden die notwendigen Austauschtiefen (bei entsprechender Stufenhöhe) nicht mehr erzielt. Allerdings sollte der Maximalgehalt von 15 Gew.-% Na₂O (bevorzugt 12 Gew.-%) auch nicht überschritten werden, da ansonsten die Kristallisationsstabilität durch Erhöhung der Diffusionsgeschwindigkeit der kristallbildenden Komponenten in der Matrix sinken würde.

Zu einem gewissen Anteil kann Na₂O durch K₂O ersetzt werden. Da K₂O kein so effektives Flussmittel darstellt wie Na₂O, sollte bevorzugt ein Gehalt von 10 Gew.-% K₂O bei einem Summengehalt von maximal 15 Gew.-% Alkalimetalloxiden (Na₂O + K₂O) nicht überschritten werden, um die Schmelzeigenschaften und damit die Produktionskosten nicht negativ zu beeinflussen. Der Zusatz von K₂O dient bevorzugt zur Feineinstellung der Ionendiffusionseigenschaften (Austauschtiefe, Ionenaustauschmenge, Profilform, Größe des Spannungsaufbaus).

BaO und ZnO als Erdalkali- und Pseudoerdalkalimetalloxide bilden neben dem Flussmittel Na₂O bzw. K₂O die wichtigsten Netzwerkmodifizierer dieses Systems. Ihre Hauptaufgabe besteht darin, die Kürze des Glases bei insgesamt recht hoher Absolutviskosität (erzeugt durch den hohen Anteil an Glasbildnern) einzustellen. ZnO, mit Gehalten zwischen 1 und 15 Gew.-% (bevorzugt 1 bis 12 Gew.-%, besonders bevorzugt 5 bis 10 Gew.-%) hat hier den stärksten Effekt, kann jedoch nicht über die angegebene Maximalgrenze hinaus eingesetzt werden, ohne die Kristallisationsneigung des Glases zu erhöhen. Zudem neigen Erdalkalioxide bei zu hohen Gehalten im Glassystem dazu, Diffusionssperrschichten aufzubauen, und wirken so einem effektiven, wirtschaftlichen Ionenaustauschprozess entgegen. Bei einem Unterschreiten der bevorzugten Mindestmenge kann die Kürze des Glases jedoch nicht von BaO alleine aufrechterhalten werden, da dessen Einfluss auf die Viskosität deutlich geringer ist. Aus diesem Grund wird BaO auch in größeren Mengen zugesetzt (20 bis 30 Gew.-%, bevorzugt 22 bis < 30 Gew.-%, besonders bevorzugt 24 bis < 30 Gew.-%), zumal seine Tendenz, die Kristallisationsneigung zu erhöhen, ebenfalls nicht so ausgeprägt ist wie bei ZnO. Zusätzlich ist BaO, als relativ hoch brechende Komponente, mitverantwortlich für die Erreichung der angestrebten optischen Lage (Brechwert um 1,6 bei mittleren Abbezahlen).

Zusätzliches Argument für alle bislang diskutierten Komponenten ist ihre fehlende Eigenabsorption im visuellen Bereich, mit nur zögernden Einsätzen im UV-Bereich. Auf diese Weise wird bereits durch dieses rudimentäre Glassystem die Basis für extrem dämpfungsarme Gläser geschaffen.

Abgerundet wird das System durch die beiden, allerdings eine gewisse Eigenabsorption besitzenden Komponenten, La₂O₃ und ZrO₂. Dies bedeutet, dass beide auf keinen Fall, ohne größere Transmissionsverluste akzeptieren zu müssen, in Gehalten über je 10 Gew.-% (bevorzugt hier 7 Gew.-%) eingesetzt werden dürfen. Zudem fördert ZrO₂ als potentieller Keimbildner die Kristallisationsneigung der Gläser, was für die Sekundärheißformgebung nachteilig ist. Dagegen liegen ihre Mindestgehalte bevorzugt bei je 1 Gew.-%, besonders bevorzugt bei je 2 Gew.-%. Beide dienen, als hoch brechende Komponenten mit differierendem Einfluss auf die Dispersion, hauptsächlich der Feineinstellung der optischen Lage und, aufgrund ihres nach oben eingeschränkten Gehalts nur mäßig, der Erhöhung der chemischen Resistenz. Bevorzugt sollten daher ihre Mindestgehalte von etwa 1 Gew.-% nicht unterschritten werden.

Die keimbildenden Eigenschaften des TiO₂ sind, neben seiner starken intrinsischen Absorption an der blauen Spektralkante (besonders in Verbindung mit Fe-Verunreinigungen), der Grund für die bevorzugte Freiheit des Glases von TiO₂.

Auch können die Erdalkalimetalloxide MgO, CaO und SrO mit einem Summengehalt von maximal 8 Gew.-% vorhanden sein, wobei bevorzugt lediglich MgO und CaO zugesetzt werden. Der Maximalwert von 8 Gew.-% sollte vorzugsweise nicht überschritten werden, da ansonsten die Kristallisationsneigung der Gläser zunehmen würde und sich zudem die Ionenaustauscheigenschaften durch die Bildung von Dispersionssperrschichten deutlich verschlechtern würden. In den geringen erlaubten Gehalten dienen diese Komponenten jedoch neben der Feinabstimmung der Austauscheigenschaften der Kürze der Gläser.

Darüber hinaus können die erfindungsgemäßen Gläser bis zu 6 Gew.-% P₂O₅ enthalten. Es dient dabei der weiteren röhrenförmigen Aufweitung des Netzwerkes zur Schaffung von Kanälen für Ionenaustauschprozesse. Diese Eigenschaft führt bei Überschreitung der Maximalmenge zu einer Destabilisierung des Netzwerkes und damit zu einem Absinken der Kristallisationsstabilität und der chemischen Resistenz. Innerhalb der aufgeführten Grenzen kann es jedoch zusätzlich zur Verkürzung der Gläser eingesetzt werden, um modernen Präzisionsheißformgebungsverfahren entgegenzukommen.

Neben zahlreichen anderen möglichen Applikationen lassen sich die erfindungsgemäßen Gläser besonders vorteilhaft zur Herstellung von optischen Stufenfasern als Kernglasmaterial einsetzen. Derartige optische Stufenfasern weisen an der Umfangswand des Kernglases vollständig anschließendes Mantelglas bevorzugt mit einer numerischen Apertur von 0,3 bis 0,75 auf.

Als auf das Kernglas abgestimmtes Mantelglas kann hierbei etwa ein Mantelglas mit folgender Zusammensetzung (in Gew.-%) verwendet werden:

| | |
|---|---|
| SiO₂ | 60 bis 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F⁻ | < 1 |
| andere Oxide | 0 bis 3, |

wobei das Glas ggf. unter Zusatz von Läutermitteln in üblichen Mengen von vorzugsweise bis zu 1 Gew.-% erschmolzen ist.

Dabei werden bevorzugt außer zufälligen Verunreinigungen keine weiteren Oxide, sondern lediglich Läutermittel ggf. in einem Bereich von bis zu 1 Gew.-%, bevorzugt von bis zu 0,5 Gew.-%, verwendet.

Wiederum enthält das Mantelglas außer zufälligen Verunreinigungen kein Cs₂O.

In bevorzugter Weiterbildung der Erfindung beträgt die Summe der Komponenten Na₂O, Li₂O und K₂O im Mantelglas weniger als 3 Gew.-%. Die bevorzugten SiO₂-Gehalte des Mantelglases liegen bei etwa 66 bis 72 Gew.-%.

Die Erfindung wird nachfolgend an Hand von Ausführungsbeispielen näher erläutert.

### Ausführungsbeispiele

Die Tabellen 2 und 3 enthalten 13 Ausführungsbeispiele im bevorzugten Zusammensetzungsbereich. Die erfindungsgemäßen Gläser werden folgendermaßen hergestellt:

Die Rohstoffe für die Oxide, bevorzugt Carbonate, Nitrate und/oder Fluoride werden abgewogen, ein oder mehrere Läutermittel, wie z.B. Sb₂O₃, zugegeben und anschließend gut gemischt. Das Glasgemenge wird bei ca. 1350°C in einem kontinuierlichen Schmelzaggregat eingeschmolzen, danach geläutert (1400°C) und homogenisiert. Bei einer Gusstemperatur von etwa 1270°C wird das Glas gegossen (oder beispielsweise zu Faserkernstäben gezogen), gekühlt und zu den gewünschten Produkten weiterverarbeitet.

Die Eigenschaften des so erhaltenen Glases sind in der Tabelle 3, Beispiel 8 angegeben. Ein Schmelzbeispiel für 100 kg berechnetes Glas ist in Tabelle 1 angegeben.

**Tabelle 1:**

| **Oxid** | **Gew.-%** | **Rohstoff** | **Einwaage (kg)** |
|---|---|---|---|
| SiO₂ | 48,0 | SiO₂ | 47,90 |
| Al₂O₃ | 4,0 | Al(OH)₃ | 6,14 |
| Na₂O | 5,0 | Na₂CO₃ | 8,56 |
| BaO | 3,0 | Ba(NO₃)₂ | 5,07 |
| BaO | 24,0 | BaCO₃ | 31,07 |
| ZnO | 6,0 | ZnO | 5,99 |
| La₂O₃ | 1,0 | La₂O₃ | 1,01 |
| ZrO₂ | 9,0 | ZrO₂ | 8,98 |
| Sb₂O₃ | 0,3 | Sb₂O₃ | 0,30 |
| Summe | 100,3 | | 115,02 |

Zum Nachweis der Kompatibilität mit üblichen Mantelgläsern (Tabelle 4) wurden stichprobenartig Zusammensetzungen aus dem beanspruchten Kernglasbereich erschmolzen und mit eben diesen üblichen Mantelgläsern zu Fasern verzogen und begutachtet:

Beim Stab-Rohr-Verfahren werden ein zylindrischer Stab aus hoch brechendem Kernglas und das ihn umgebende Rohr aus niedrig brechendem Mantelglas in einem zylindrischen Ofen auf eine Temperatur entsprechend einer Zähigkeit von etwa 10⁴ bis 10³ dPas erhitzt. Kern- und Mantelglas verschmelzen dabei zu einer sogenannten Ziehzwiebel, aus der die optische Faser gezogen wird. Der Faserdurchmesser hängt dabei ab vom Verhältnis der Faserziehgeschwindigkeit zur Nachführgeschwindigkeit des Stab-Rohr-Systems und den Abmessungen von Kernstab und Rohr. Besondere Sorgfalt ist bei diesem Verfahren darauf zu legen, dass die Kernstaboberfläche und die Rohrinnenfläche extrem sauber und frei von jeglichem Schmutz und Partikeln sind, damit sie zu einer möglichst idealen, störungsfreien Grenzfläche der Faser verschmelzen können. Ebenso hat sich als vorteilhaft erwiesen, wenn Außendurchmesser des Kernstabs und Innendurchmesser des Rohrs sich nur um wenige Zehntel Millimeter unterscheiden, so dass sich eine gleichmäßige faltenfreie Ziehzwiebel ausbilden kann.

Die benötigten Kernglasstäbe unterschiedlicher Glaszusammensetzung wurden wie folgt hergestellt: Für jede gewählte Glaszusammensetzung wurde (aufgrund der geringen benötigten Glasmenge nur) eine 4-1-Schmelze (dämpfungsfreundliche Arsenläuterung) durchgeführt und in eine Barrenform (ca. 400 mm x 200 mm x 50 mm) gegossen. Hieraus wurden jeweils 2 bis 3 zylindrische Stäbe, ca. 300 mm lang und mit einem Durchmesser von 30 mm, mechanisch herausgearbeitet. Im letzten Bearbeitungsschritt erhielten die Stäbe eine feinoptische Politur, um die oben genannten Anforderungen an eine ideale Grenzfläche zu erfüllen. Insgesamt wurden 10 unterschiedliche erfindungsgemäße Kernglastypen geschmolzen und zu Kernglasstäben verarbeitet, zum Teil mit gleichen Glaszusammensetzungen wie die angegebenen Beispiele, zum Teil auch mit anderen Zusammensetzungen.

Die zum Faserziehen benötigten verschiedenen Mantelgläser lagen, wie oben erwähnt, in geeigneter Rohrform vor (Innendurchmesser - 31 mm, Außendurchmesser - 34 mm bis 35 mm). Als maschinenhergestellte, aus einer Pt-Düse gezogene Rohre, waren deren Abmessungen eng kalibriert, so dass keine zusätzliche mechanische Bearbeitung erforderlich war. Lediglich vor der Zusammenstellung zu einem Stab-Rohr-System, kurz vor dem Ziehvorgang, wurden Kernstab und Rohr in einem Ultraschall-Bad nach gängigem Verfahren sorgfältig gereinigt, um eine optimale Grenzfläche bei der Verschmelzung im Ziehprozess zu gewährleisten.

Das Ausziehen zur Faser erfolgte an einer Stab-Rohr-Ziehmaschine mit zylindrischem Ofen nach dem Stand der Technik. Es wurden ausschließlich Fasern mit 70 µm Durchmesser gezogen. Dies entspricht einem weltweit verbreiteten Standard, der sich für Mehrkomponentenfasern, die fast ausschließlich zu Bündelfasern verarbeitet werden, eingebürgert hat.

Die in Tabelle 4 aufgeführten Mantelglasbeispiele 4 und 5 verursachten durch ihre erhöhten Viskositäten und signifikante Länge gewisse Probleme im Faserziehprozess, da die Viskositäts-Temperaturprofile der erfindungsgemäßen Gläser, im Hinblick auf moderne Präzisions(primär)heißformgebungsprozesse, auf "kurze" Typen abgestimmt sind. Dadurch ergibt sich der erfindungsgemäß beanspruchte Mantelglaszusammensetzungsbereich bezüglich des SiO₂-Gehalts (60 bis 72 Gew.-%, bevorzugt 66 bis 72 Gew.-%).

Sämtliche mit den Mantelgläsern 1 bis 3 bestimmten numerischen Aperturen lagen im Bereich zwischen 0,3 bis 0,75. Naturgemäß ergaben sich bei Kombinationen von eher höher brechenden Kerngläsern mit eher tiefer brechenden Mantelgläsern die höheren Aperturwerte, während Kombinationen von eher tiefer brechenden Kerngläsern mit eher höher brechenden Mantelgläsern geringere Aperturwerte erfasst wurden.

Die Messung der Dämpfung erfolgte nach dem sogenannten Rückschneideverfahren (DIN 58 141 - 1). Dabei ergaben sich für Multikomponentengläser außerordentlich gute Werte im Bereich von < 1000 dB/km bei 452 nm, < 500 dB/km bei 554 nm und < 750 dB/km bei 642 nm.

**Tabelle 2:**

| Zusammensetzung (Gew.-%) | | | | | | | |
|---|---|---|---|---|---|---|---|
| Beispiel Nr. | 1 | 2 | 3 | 4 | 5 | 6 | 7 |
| SiO₂ | 40 | 39 | 45 | 37 | 42 | 43 | 45 |
| Al₂O₃ | 5 | 7 | 3 | 6 | 5 | 2 | 7 |
| Na₂O | 10 | 8 | 12 | 11 | 10 | 6 | 7 |
| BaO | 27 | 29,5 | 24 | 22 | 26 | 28 | 20 |
| ZnO | 8 | 5,5 | 10 | 10 | 9 | 8 | 7 |
| La₂O₃ | 5 | 7 | 2 | 7 | 6 | 5 | 4 |
| ZrO₂ | 5 | 4 | 5 | 7 | 2 | 8 | 10 |
| As₂O₃ | | 0,3 | | | 0,3 | | |
| Summe | 100 | 100,3 | 100 | 100 | 100,3 | 100 | 100 |
| n_{d} | 1,6001 | 1,6042 | 1,5888 | 1,6045 | 1,5928 | 1,6097 | 1,6005 |
| ν_{d} | 52,3 | 52,5 | 52,2 | 51,3 | 52,5 | 53,0 | 51,2 |
| P_{g,F} | 0,5521 | 0,5501 | 0,5521 | 0,5534 | 0,5520 | 0,5507 | 0,5540 |
| ΔP_{g, F}(10⁻⁴) | -36 | -33 | -36 | -40 | -33 | -37 | -36 |
| ρ (g/cm³) | 3,69 | 3,36 | 3,28 | 3,38 | 3,29 | 3,49 | 3,23 |
| α₂₀₋₃₀₀ (10⁻⁶ * K⁻¹) | 10,8 | 8,7 | 10,2 | 9,3 | 9,4 | 8,1 | 7,5 |
| Tg (°C) | 541 | 570 | 547 | 550 | 548 | 617 | 588 |

**Tabelle 3:**

| Zusammensetzung (Gew.-%) | | | | | | |
|---|---|---|---|---|---|---|
| Beispiel Nr. | 8 | 9 | 10 | 11 | 12 | 13 |
| SiO₂ | 48 | 35 | 41 | 49 | 49 | 36 |
| Al₂O₃ | 4 | 10 | 8 | 1 | 9 | 2 |
| Na₂O | 5 | 15 | 13 | 5 | 9 | 14 |
| BaO | 27 | 20 | 23 | 21 | 20 | 29,5 |
| ZnO | 6 | 11 | 12 | 15 | 1 | 14 |
| La₂O₃ | 1 | 8 | 10 | 3 | 9 | 2 |
| ZrO₂ | 9 | 1 | 3 | 6 | 3 | 2,5 |
| Sb₂O₃ | 0,3 | | | | 0,3 | |
| Summe | 100,3 | 100 | 100 | 100 | 100,3 | 100 |
| n_{d} | 1,6008 | 1,5897 | 1,5984 | 1,5996 | 1,5828 | 1,5968 |
| ν_{d} | 52,7 | 50,5 | 51,0 | 52,9 | 51,6 | 52,8 |
| P_{g,F} | 0,5518 | 0,5551 | 0,5539 | 0,5512 | 0,5538 | 0,5511 |
| ΔP_{g, F}(10⁻⁴) | -32 | -37 | -40 | -34 | -33 | -36 |
| ρ (g/cm³) | 3,32 | 3,18 | 3,30 | 3,36 | 2,97 | 3,50 |
| α₂₀₋₃₀₀ (10⁻⁶ * K⁻¹) | 7,6 | 10,5 | 9,5 | 7,3 | 7,9 | 11,7 |
| Tg (°C) | 622 | 479 | 522 | 618 | 529 | 535 |

**Tabelle 4**

| Mantelglasvarianten | | | | | |
|---|---|---|---|---|---|
| | Zusammensetzung (Gew.-%) | | | | |
| Beispiel Nr. | 1 | 2 | 3 | 4 | 5 |
| SiO₂ | 69 | 70 | 68 | 81 | 75 |
| B₂O₃ | 19 | 1 | 3 | 12 | 10 |
| Al₂O₃ | 3 | 4 | 8 | 2 , 5 | 5 |
| Na₂O | 1 | 13 | 15 | 3,5 | 7 |
| K₂O | 8 | 2,3 | | 1 | 0,1 |
| Li₂O | | | 1 | | |
| MgO | | 2,5 | | | |
| BaO | | 2 | | | 0,6 |
| CaO | | 5 | 3 | | 1,4 |
| ZnO | | | 1,5 | | |
| F⁻ | | 0,2 | 0,5 | | 0,2 |

## Patentansprüche

1. Aluminosilikatglas mit folgender Zusammensetzung:
| | | |
|---|---|---|
| SiO₂ | 35 bis <50 | Gew.-% |
| Al₂O₃ | 1 bis 10 | Gew.-% |
| Na₂O+K₂O+ | | |
| Cs₂O+Li₂O | mindestens 5 | Gew.-% |
| Cs₂O | <1 | Gew.-% |
| Li₂O | < 1 | Gew.-% |
| BaO | 20 bis 30 | Gew.-% |
| ZnO | 0 bis 15 | Gew.-% |
| La₂O₃ | 0 bis 10 | Gew.-% |
| ZrO₂ | 0 bis 10 | Gew.-% |
| TiO₂ | < 1 | Gew.-% |
| P₂O₅ | 0 bis 6 | Gew.-% |
| MgO+CaO+SrO | 0 bis 8 | Gew.-% |
| MgO+CaO | 0 bis 8 | Gew.-% |
| andere Oxide | 0 bis 2 | Gew.-%, |
wobei das Glas kein AgO, CuO, Tl₂O, PbO und B₂O₃ enthält und ggf. unter Zusatz von Läutermitteln in üblichen Mengen von vorzugsweise bis zu 1 Gew.-% erschmolzen ist, und wobei der Gehalt an Na₂O mindestens 5 Gew.-% beträgt, **dadurch gekennzeichnet, dass** der Gehalt Na₂O+K₂O+Cs₂O+Li₂O höchstens 15 Gew.-% beträgt, dass der Gehalt Na₂O+K₂O höchstens 15 Gew.-% beträgt, dass der Gehalt an ZnO mindestens 1 Gew.-% beträgt, dass der Gehalt an La₂O₃ mindestens 1 Gew.-% beträgt, und dass der Gehalt an ZrO₂ mindestens 1 Gew.-% beträgt.

2. Aluminosilikatglas nach Anspruch 1, das kein TiO₂, Li₂O und Cs₂O enthält.

3. Aluminosilikatglas nach Anspruch 1 oder 2 mit folgender Zusammensetzung in Gew.-%:
| | |
|---|---|
| SiO₂ | 35 bis <50 |
| Al₂O₃ | 1 bis 10 |
| Na₂O+K₂O | 5 bis 15 |
| BaO | 20 bis 30 |
| ZnO | 1 bis 15 |
| La₂O₃ | 1 bis 10 |
| ZrO₂ | 1 bis 10 |
| P₂O₅ | 0 bis 6 |
| MgO+CaO | 0 bis 8. |

4. Aluminosilikatglas nach einem der vorhergehenden Ansprüche, bei dem das Läutermittel mindestens eine der aus Sb₂O₃, As₂O₃, SnO, NaCl, SO^{4.} und F gebildeten Gruppe ausgewählte Komponente ist.

5. Aluminosilikatglas nach einem der vorhergehenden Ansprüche mit folgender Zusammensetzung in Gew.-%:
| | |
|---|---|
| SiO₂ | 35 bis 48 |
| Al₂O₃ | 1 bis 10 |
| Na₂O+K₂O | 5 bis 15 |
| BaO | 20 bis <30 |
| ZnO | 1 bis 12 |
| La₂O₃ | 1 bis 10 |
| ZrO₂ | 1 bis 10 |
| P₂O₅ | 0 bis 6 |
| MgO+CaO | 0 bis 8. |

6. Aluminosilikatglas nach einem der vorhergehenden Ansprüche mit folgender Zusammensetzung in Gew.-%:
| | |
|---|---|
| SiO₂ | 35 bis 45 |
| Al₂O₃ | 2 bis 7 |
| Na₂O+K₂O | 6 bis 12 |
| BaO | 20 bis <30 |
| ZnO | 5 bis 10 |
| La₂O₃ | 1 bis 7 |
| ZrO₂ | 1 bis 10 |
| P₂O₅ | 0 bis 6 |
| MgO+CaO | 0 bis 8. |

7. Aluminosilikatglas nach einem der vorhergehenden Ansprüche mit folgender Zusammensetzung in Gew.-%:
| | |
|---|---|
| SiO₂ | 37 bis 45 |
| Al₂O₃ | 3 bis 7 |
| Na₂O+K₂O | 8 bis 12 |
| BaO | 22 bis <30 |
| ZnO | 5 bis 10 |
| La₂O₃ | 2 bis 7 |
| ZrO₂ | 2 bis 7 |
| P₂O₅ | 0 bis 6 |
| MgO+CaO | 0 bis 8. |

8. Aluminosilikatglas nach einem der vorhergehenden Ansprüche mit folgender Zusammensetzung in Gew.-%:
| | |
|---|---|
| SiO₂ | 39 bis 45 |
| Al₂O₃ | 3 bis 7 |
| Na₂O+K₂O | 8 bis 12 |
| BaO | 24 bis <30 |
| ZnO | 5 bis 10 |
| La₂O₃ | 2 bis 7 |
| ZrO₂ | 2 bis 7 |
| P₂O₅ | 0 bis 6 |
| MgO+CaO | 0 bis 8. |

9. Aluminosilikatglas nach einem der vorhergehenden Ansprüche, das kein As₂O₃ enthält.

10. Aluminosilikatglas nach einem der vorhergehenden Ansprüche, das einen Brechungsindex n_{d} von 1,55 ≤ n_{d} ≤ 1,65 und einen Abbewert von 48 ≤ v_{d} ≤ 57 aufweist.

11. Verwendung eines Aluminosilikatglases nach einem der vorhergehenden Ansprüche als Glas für optische Anwendungen, insbesondere für mindestens eines der Applikationsfelder Abbildung, Projektion, Telekommunikation, optische Nachrichtentechnik, Lasertechnologie.

12. Optische Stufenfaser aus Mehrkomponentengläsern mit einem Kernglas nach einem der Ansprüche 1 bis 10 und mit einem vollständig an seiner Umfangswand anschließenden Mantelglas mit einer numerischen Apertur von 0,30 bis 0,75.

13. Optische Stufenfaser nach Anspruch 12, bei der das Mantelglas folgende Zusammensetzung in Gew.-% aufweist :
| | |
|---|---|
| SiO₂ | 60 bis 72 |
| B₂O₃ | < 20 |
| Na₂O | < 18 |
| K₂O | <15 |
| Li₂O | <2 |
| MgO | < 3 |
| BaO | < 3 |
| SrO | < 4 |
| CaO | < 6 |
| ZnO | < 3 |
| F | < 1 |
| andere Oxide 0 bis 3, | |
wobei das Glas ggf. unter Zusatz von Läutermitteln in üblichen Mengen von vorzugsweise bis zu 1 Gew.-% erschmolzen ist.

14. Optische Stufenfaser nach Anspruch 13, bei der das Mantelglas folgende Zusammensetzung in Gew.-% aufweist:
| | |
|---|---|
| SiO₂ | 60 bis 72 |
| B₂O₃ | < 20 |
| Na₂O | < 18 |
| K₂O | < 15 |
| Li₂O | < 2 |
| MgO | < 3 |
| BaO | < 3 |
| SrO | < 4 |
| CaO | < 6 |
| ZnO | < 3 |
| F- | <1. |

15. Optische Stufenfaser nach Anspruch 13 oder 14, bei der das Mantelglas kein Cs₂O enthält.

16. Optische Stufenfaser nach einem der Ansprüche 12 bis 15, bei der im Mantelglas die Summe der Komponenten Na₂O, Li₂O und K₂O < 3 Gew.-% ist.

17. Optische Stufenfaser nach einem der Ansprüche 12 bis 16, bei der das Mantelglas einen SiO₂-Gehalt von 66 bis 72 Gew.-% aufweist.

18. Verwendung einer optischen Stufenfaser nach einem der Ansprüche 12 bis 17 für mindestens eines der Folgenden: zur Übertragung von Licht, in einem Faserbündel, zur Datenübertragung, zur Datenübertragung in Fahrzeugen, zur Fahrzeugbeleuchtung, als Verkehrszeichengeber, für die Bahnsignalisation, als alphanumerisches Display, zur Beleuchtung in Kaltlichtquellen, zur Beleuchtung in der medizinischen und technischen Endoskopie, insbesondere in der Operationsmikroskopie.

## Claims

1. An aluminosilicate glass consisting of:
| | | |
|---|---|---|
| SiO₂ | 35 to <50 | wt.-% |
| Al₂O₃ | 1 to 10 | wt.-% |
| Na₂O+K₂O | | |
| +Cs₂O+Li₂O | at least 5 | wt.-% |
| Cs₂O | <1 | wt.-% |
| Li₂O | <1 | wt.-% |
| BaO | 20 to 30 | wt.-% |
| ZnO | 0 to 15 | wt.-% |
| La₂O₃ | 0 to 10 | wt.-% |
| ZrO₂ | 0 to 10 | wt.-% |
| TiO₂ | <1 | wt.-% |
| P₂O₅ | 0 to 6 | wt.-% |
| MgO+CaO+SrO | 0 to 8 | wt.-% |
| other oxides | 0 to 2, | wt.-%, |
wherein the glass does not contain any AgO, CuO, Tl₂O, PbO or B₂O₃ and may be molten by adding refining agents in common amounts of preferably up to 1 wt.-%, and wherein the content of Na₂O is at least 5 wt.-%, **characterized in that** the content of Na₂O+K₂O+Cs₂O+Li₂O is 15 wt.-% at the most, **in that** the content of Na₂O+K₂O is 15 wt.-% at the most, **in that** the content of ZnO is at least 1 wt.-%, **in that** the content of La₂O₃ is at least 1 wt.-%, and **in that** the content of ZrO₂ is at least 1 wt.-%.

2. The aluminosilicate glass of claim 1 which does not comprise any TiO₂, Li₂O or Cs₂O.

3. The aluminosilicate glass of claim 1 or 2, having the following composition (in wt.-%):
| | |
|---|---|
| SiO₂ | 35 to <50 |
| Al₂O₃ | 1 to 10 |
| Na₂O+K₂O | 5 to 15 |
| BaO | 20 to 30 |
| ZnO | 1 to 15 |
| La₂O₃ | 1 to 10 |
| ZrO₂ | 1 to 10 |
| P₂O₅ | 0 to 6 |
| MgO+CaO | 0 to 8. |

4. The aluminosilicate glass of any of the preceding claims, wherein the refining agent comprises at least one component selected from the group consisting of Sb₂O₃, As₂O₃, SnO, NaCl, SO⁴ and F.

5. The aluminosilicate glass of any of the preceding claims having the following composition (in wt.-%):
| | |
|---|---|
| SiO₂ | 35 to 48 |
| Al₂O₃ | 1 to 10 |
| Na₂O+K₂O | 5 to 15 |
| BaO | 20 to <30 |
| ZnO | 1 to 12 |
| La₂O₃ | 1 to 10 |
| ZrO₂ | 1 to 10 |
| P₂O₃ | 0 to 6 |
| MgO+CaO | 0 to 8. |

6. The aluminosilicate glass of any of the preceding claims having the following composition (in wt.-%):
| | |
|---|---|
| SiO₂ | 35 to 45 |
| Al₂O₃ | 2 to 7 |
| Na₂O+K₂O | 6 to 12 |
| BaO | 20 to <30 |
| ZnO | 5 to 10 |
| La₂O₃ | 1 to 7 |
| ZrO₂ | 1 to 10 |
| P₂O₅ | 0 to 6 |
| MgO+CaO | 0 to 8. |

7. The aluminosilicate glass of any of the preceding claims having the following composition (in wt.-%):
| | |
|---|---|
| SiO₂ | 37 to 45 |
| Al₂O₃ | 3 to 7 |
| Na₂O+K₂O | 8 to 12 |
| BaO | 22 to <30 |
| ZnO | 5 to 10 |
| La₂O₃ | 2 to 7 |
| ZrO₂ | 2 to 7 |
| P₂O₅ | 0 to 6 |
| MgO+CaO | 0 to 8. |

8. The aluminosilicate glass of any of the preceding claims having the following composition (in wt.-%):
| | |
|---|---|
| SiO₂ | 39 to 45 |
| Al₂O₃ | 3 to 7 |
| Na₂O+K₂O | 8 to 12 |
| BaO | 24 to <30 |
| ZnO | 5 to 10 |
| La₂O₃ | 2 to 7 |
| ZrO₂ | 2 to 7 |
| P₂O₅ | 0 to 6 |
| MgO+CaO | 0 to 8. |

9. The aluminosilicate glass of any of the preceding claims which does not contain any As₂O₃.

10. The aluminosilicate glass of any of the preceding claims having a refractive index n_{d} of 1.55 ≤ na ≤ 1.65 and an Abbe number of 48 ≤ v_{d} ≤ 57.

11. Use of an aluminosilicate glass of any of the preceding claims for a glass for optical applications, in particular for at least one of the following fields of application: imaging, projection, telecommunication, optical communication engineering, laser technology.

12. An optical stepped-index fiber comprising multi-component glasses and having a core glass according to any of claims 1 to 10, and further comprising a cladding glass having a numerical aperture of 0.30 to 0.75.

13. The optical stepped-index fiber of claim 12, wherein said cladding glass has the following composition (in wt.-%):
| | |
|---|---|
| SiO₂ | 60 to 72 |
| B₂O₃ | < 20 |
| Na₂O | < 18 |
| K₂O | < 15 |
| Li₂O | < 2 |
| MgO | <3 |
| BaO | < 3 |
| SrO | < 4 |
| CaO | < 6 |
| ZnO | < 3 |
| F- | < 1 |
| other oxides 0 to 3, | |
wherein the cladding glass may be molten by adding refining agents in common amounts of preferably up to 1 wt.-%.

14. The optical stepped-index fiber of claim 13, wherein said cladding glass has the following composition (in wt.-%):
| | |
|---|---|
| SiO₂ | 60 to 72 |
| B₂O₃ | < 20 |
| Na₂O | <18 |
| K₂O | < 15 |
| Li₂O | <2 |
| MgO | < 3 |
| BaO | < 3 |
| SrO | < 4 |
| CaO | < 6 |
| ZnO | < 3 |
| F- | < 1. |

15. The optical stepped-index fiber of claim 13 or 14, wherein the cladding glass does not contain any Cs₂O.

16. The optical stepped-index fiber of any of claims 12 to 15, wherein in said cladding glass the sum of the components Na₂O, Li₂O and K₂O is smaller than 3 wt.-%.

17. The optical stepped-index fiber of any of claims 12 to 16 wherein in said cladding glass the content of SiO₂ is between 66 and 72 wt.-%.

18. Use of the optical stepped-index fiber of any of claims 12 to 17 for at least one of the following applications: the transmission of light, in a fiber bundle, for data communication, for data communication in vehicles, for vehicle illumination, for traffic light character generators, for railway signalling, as an alphanumerical display, for the illumination in cold light sources, for the illumination in the medical and technical endoscopy, in particular in surgical microscopy.

## Revendications

1. Verre aluminosilicaté présentant la composition suivante :
| | | |
|---|---|---|
| SiO₂ | 35 à <50 | % en poids |
| Al₂O₃ | 1 à 10 | % en poids |
| Na₂O+K₂O+ | | |
| Cs₂O+Li₂O | au moins 5 | % en poids |
| Cs₂O | <1 | % en poids |
| Li₂O | <1 | % en poids |
| BaO | 20 à 30 | % en poids |
| ZnO | 0 à 15 | % en poids |
| La₂O₃ | 0 à 10 | % en poids |
| ZrO₂ | 0 à 10 | % en poids |
| TiO₂ | <1 | % en poids |
| F₂O₅ | 0 à 6 | % en poids |
| MgO+CaO+SrO | 0 à 8 | % en poids |
| MgO+CaO | 0 à 8 | % en poids |
| autres oxydes | 0 à 2 | % en poids, |
dans lequel le verre ne contient pas d'AgO, CuO, Tl₂O, PbO, ni B₂O₃ et est éventuellement élaboré en ajoutant des moyens d'affinage en quantités usuelles de préférence 1 % en poids au maximum, et dans lequel la teneur en Na₂O s'élève au moins à 5 % en poids, **caractérisé en ce que** la teneur en Na₂O+K₂O+Cs₂O+Li₂O s'élève au maximum à 15% en poids, **en ce que** la teneur en Na₂O+K₂O s'élève au maximum à 15% en poids, **en ce que** la teneur en ZnO s'élève au moins à 1 % en poids, **en ce que** la teneur en La₂O₃ s'élève au moins à 1 % en poids, et **en ce que** la teneur en ZrO₂ s'élève au moins à 1 % en poids.

2. Verre aluminosilicaté selon la revendication 1, qui ne contient pas de TiO₂, Li₂O, ni Cs₂O.

3. Verre aluminosilicaté selon la revendication 1 ou 2 présentant la composition suivante en % en poids :
| | |
|---|---|
| SiO₂ | 35 à <50 |
| Al₂O₃ | 1 à 10 |
| Na₂O+K₂O | 5 à 15 |
| BaO | 20 à 30 |
| ZnO | 1 à 15 |
| La₂O₃ | 1 à 10 |
| ZrO₂ | 1 à 10 |
| P₂O₅ | 0 à 6 |
| MgO+CaO | 0 à 8. |

4. Verre aluminosilicaté selon l'une quelconque des revendications précédentes, pour lequel le moyen d'affinage est au moins un composant sélectionné dans le groupe constitué de Sb₂O₃, As₂O₃, SnO, NaCl, SO⁴⁻ et F⁻.

5. Verre aluminosilicaté selon l'une quelconque des revendications précédentes, présentant la composition suivante en % en poids :
| | |
|---|---|
| SiO₂ | 35 à 48 |
| Al₂O₃ | 1 à 10 |
| Na₂O+K₂O | 5 à 15 |
| BaO | 20 à <30 |
| ZnO | 1 à 12 |
| La₂O₃ | 1 à 10 |
| ZrO₂ | 1 à 10 |
| P₂O₅ | 0 à 6 |
| MgO+CaO | 0 à 8. |

6. Verre aluminosilicaté selon l'une quelconque des revendications précédentes, présentant la composition suivante en % en poids :
| | |
|---|---|
| SiO₂ | 35 à 45 |
| Al₂O₃ | 2 à 7 |
| Na₂O+K₂O | 6 à 12 |
| BaO | 20 à <30 |
| ZnO | 5 à 10 |
| La₂O₃ | 1 à 7 |
| ZrO₂ | 1 à 10 |
| P₂O₅ | 0 à 6 |
| MgO+CaO | 0 à 8. |

7. Verre aluminosilicaté selon l'une quelconque des revendications précédentes, présentant la composition suivante en % en poids :
| | |
|---|---|
| SiO₂ | 37 à 45 |
| Al₂O₃ | 3 à 7 |
| Na₂O+K₂O | 8 à 12 |
| BaO | 22 à <30 |
| ZnO | 5 à 10 |
| La₂O₃ | 2 à 7 |
| ZrO₂ | 2 à 7 |
| P₂O₅ | 0 à 6 |
| MgO+CaO | 0 à 8. |

8. Verre aluminosilicaté selon l'une quelconque des revendications précédentes, présentant la composition suivante en % en poids :
| | |
|---|---|
| SiO₂ | 39 à 45 |
| Al₂O₃ | 3 à 7 |
| Na₂O+K₂O | 8 à 12 |
| BaO | 24 à <30 |
| ZnO | 5 à 10 |
| La₂O₃ | 2 à 7 |
| ZrO₂ | 2 à 7 |
| P₂O₅ | 0 à 6 |
| MgO+CaO | 0 à 8. |

9. Verre aluminosilicaté selon l'une quelconque des revendications précédentes, qui ne contient pas d'As₂O₃.

10. Verre aluminosilicaté selon l'une quelconque des revendications précédentes, qui présente un indice de réfraction n_{d} de 1,55 ≤ n_{d} ≤ 1,65 et une valeur d'Abbe de 48 ≤ v_{d} ≤ 57.

11. Utilisation d'un verre aluminosilicaté selon l'une quelconque des revendications précédentes comme verre pour des applications optiques, en particulier pour au moins l'un des champs d'application suivants : reproduction, projection, télécommunication, technique des communications optiques, technologie laser.

12. Fibre optique à échelon d'indice composée de verres à plusieurs composants avec un verre de coeur selon l'une quelconque des revendications 1 à 10 et avec un verre de gaine complètement consécutif à sa paroi périphérique avec une ouverture numérique comprise entre 0,30 et 0,75.

13. Fibre optique à échelon d'indice selon la revendication 12, pour laquelle le verre de gaine présente la composition suivante en % en poids :
| | |
|---|---|
| SiO₂ | 60 à 72 |
| B₂O₃ | <20 |
| Na₂O | <18 |
| K₂O | < 15 |
| Ll₂O | <2 |
| MgO | <3 |
| BaO | <3 |
| SrO | <4 |
| CaO | <6 |
| ZnO | <3 |
| F- | < 1 |
| autres oxydes | 0 à 3, |
dans laquelle le verre est éventuellement élaboré en ajoutant des moyens d'affinage en quantités usuelles de préférence de 1 % en poids au maximum.

14. Fibre optique à échelon d'indice selon la revendication 13, pour laquelle le verre de gaine présente la composition suivante en % en poids :
| | |
|---|---|
| SiO₂ | 60 à 72 |
| B₂O₃ | <20 |
| Na₂O | <18 |
| K₂O | < 15 |
| Li₂O | <2 |
| MgO | <3 |
| BaO | <3 |
| SrO | <4 |
| CaO | <6 |
| ZnO | <3 |
| F⁻ | < 1. |

15. Fibre optique à échelon d'indice selon la revendication 13 ou 14 pour laquelle le verre de gaine ne contient pas de Cs₂O.

16. Fibre optique à échelon d'indice selon l'une quelconque des revendications 12 à 15, pour laquelle la somme des composants Na₂O, Li₂O et K₂O dans le verre de gaine est < 3 % en poids.

17. Fibre optique à échelon d'indice selon l'une quelconque des revendications 12 à 16, pour laquelle le verre de gaine présente une teneur en SiO₂ comprise entre 66 et 72 % en poids.

18. Utilisation d'une fibre optique à échelon d'indice selon l'une quelconque des revendications 12 à 17 pour au moins l'un des objectifs suivants : transmission de la lumière, dans un faisceau de fibres optiques, transmission de données, transmission de données dans des véhicules, éclairage de véhicule, comme indicateur de signalisation, pour la signalisation ferroviaire, comme affichage alphanumérique, éclairage en sources de lumière froide, éclairage en endoscopie médicale et technique, en particulier en microscopie opérationnelle.
